# EUROPÄISCHE PATENTANMELDUNG

(11) **EP 1 837 574 A1**
(43) Veröffentlichungstag der Anmeldung: **26.09.2007**
(21) Anmeldenummer: 07100820.5
(22) Anmeldetag: 19.01.2007
(51) Int. Cl.: F16L 13/14

(54) **Struktur-O-Ring**

(30) Priorität: 21.03.2006 DE 202006004457 U
(71) Anmelder: IPA Produktions- & Vertriebsges.m.b.H., 1230 Wien (AT)
(72) Erfinder: Ogris, Bernhard, 2511 Pfaffstätten (AT)
(74) Vertreter: Schwabe, Hans-Georg

(57) **Zusammenfassung**

Die vorliegende Erfindung betrifft eine Dichteinrichtung für Pressverbindungen mit einem ringförmigen Körper aus einem elastischen bzw. verformbaren Material, wobei der ringförmige Körper (12) eine Dichtoberfläche (14, 14a) bereitstellt, insbesondere O-ringartig oder polygonartig ist, und der ringförmige Körper mindestens eine Erstreckung (16, 20) und/oder Vertiefung aufweist, die aus dem Niveau der Dichtoberfläche (14, 14a) herausragt bzw. unterhalb des Niveaus endet.

## Beschreibung

Die Erfindung betrifft eine Dichteinrichtung insbesondere für Pressverbindungen mit einem ringförmigen Körper aus einem elastischen bzw. verformbaren Material, wobei der ringförmige Körper eine Dichtoberfläche bereitstellt, und die insbesondere O-ringartig ist, gemäß dem Oberbegriff des Anspruchs 1. Ferner betrifft die Erfindung eine Pressverbindung gemäß dem Anspruch 9.

Im Stand der Technik sind diverse Arten von Pressverbindungen bekannt, die in der Regel mit einer Dichteinrichtung in der Form eines 0-Ringes abgedichtet werden. Zur Herstellung einer dichten Pressverbindung wird bei einer Pressverbindung mit einer Stützkörper, einer Presshülse und einem Anschlagabschnitt ein Rohrende eines in der Regel auch Kunststoff aufweisenden Rohres in einen Ringraum zwischen der Stützkörper und der Presshülse eingeschoben. Dabei ist in wenigstens eine Nut der Stützkörper eine O-Ringdichtung eingesetzt. Wird nun das Ende des Rohres in den Ringraum eingeschoben, wird der 0-Ring in der Regel mit einem Anpressdruck beaufschlagt, obwohl die Pressverbindung noch nicht verpresst ist. Hier tritt bereits eine merkliche Dichtwirkung auf. Wird nun eine unverpresste Pressverbindung in einem Rohrleitungsnetz einer Flüssigkeit, etwa auch nur zur Prüfung der Dichtigkeit oder einem Gas ausgesetzt, reicht in der Regel die Dichtigkeit der unverpressten Pressverbindung aus, um wenigstens kurzzeitig dem jeweiligen Medium standzuhalten. Es wird dann sehr schwer, die undichte Pressverbindung, die undicht ist, weil sie eben nicht verpresst wurde, im Rohrleitungssystem aufzufinden. Hier wäre es wünschenswert, wenn eine entsprechende Pressverbindung im unverpressten Zustand eine Durchlässigkeit aufweisen würde, die insbesondere auf der Baustelle einem Installateur die Möglichkeit einräumt, eine Undichtigkeit und damit eine unverpresste Pressverbindung wahrnehmen zu können.

Es ist folglich eine Aufgabe gemäß der Erfindung, eine Möglichkeit bereitzustellen, um eine unverpresste und damit undichte Pressverbindung leicht aufspüren zu können.

Diese Aufgabe wird durch eine Dichteinrichtung gemäß dem Anspruch 1 bzw. eine Pressverbindung gemäß dem Anspruch 9 gelöst. Zweckmäßige Ausführungsformen ergeben sich aus den Unteransprüchen.

Die erfindungsgemäß erzielbaren Vorteile beruhen darauf, dass der ringförmige Körper der Dichteinrichtung mindestens eine Erstreckung und/oder eine Vertiefung aufweist, die aus dem Niveau der Dichtoberfläche herausragt bzw. unterhalb dieses Niveaus endet. Hierdurch ist es möglich, zwischen den Flanken der Erstreckung bzw. der Vertiefung und der angrenzenden Dichtoberfläche des abzudichtenden Rohres im unverpressten Zustand jeweils einen durchlässigen Kanal bereitzustellen. Im Falle einer Vertiefung ergibt sich entsprechend der Struktur der Vertiefung in der Regel nur ein Kanal. Wird nun die Dichteinrichtung verpresst, wird die Erstreckung verpresst und das Material der Erstreckung verdrängt, so dass die im unverpressten Zustand vorhandenen Kanäle abgedichtet werden. Entsprechend werden im Falle einer Vertiefung zu der Vertiefung benachbarte Materialmengen der Dichteinrichtung durch den Verpressvorgang in die Vertiefung verdrängt und setzen den durch die Vertiefung bereitgestellten Leckkanal zu.

Auf diese Weise ist es gemäß der Erfindung möglich, reproduzierbar einen Leckkanal zur Verfügung zu stellen, der das Auffinden unverpresster Pressverbindungen problemlos ermöglicht.

Sind mehrere Erstreckungen vorgesehen, die eng benachbart sind, ergibt sich durch die benachbarten Erstreckungen ein größerer Kanalquerschnitt, der den Austritt größerer Mengen an Medium aus dem abgedichteten Leitungsvolumen ermöglicht, so dass das Auffinden unverpresster Pressverbindungen erleichtert werden kann.

Um den Verdrängungsprozess von Material der Erstreckungen bzw. Material des Dichtkörpers in die Vertiefungen zu erleichtern, kann die die Leckagefunktion erfüllende Struktur entlang der Dichtoberfläche der Dichteinrichtung unterbrochen werden. So hat es sich als vorteilhaft erwiesen, wenn die Erstreckung(en) bzw. Vertiefung(en) über ca. die Hälfte der Dichtoberfläche in Umfangsrichtung in der querschnittlichen Darstellung erstreckt sind, wobei die andere Hälfte im Wesentlichen auf dem Niveau der Dichtoberfläche des ringförmigen Körpers der erfindungsgemäßen Dichteinrichtung ist. Dieses Verhältnis führt dazu, dass selbst bei einer Verwindung der Dichteinrichtung immer eine der Erstreckungen bzw. Vertiefungen so an einer Dichtfläche innerhalb der Pressverbindung anliegt, dass der gewünschte Leck- bzw. Leckagekanal vorliegt.

Dabei haben sich einige Werte als besonders vorteilhaft erwiesen. Sind in Umfangsrichtung die Erstreckungen bzw. Vertiefungen um ca. 40° bis ca. 80°, insbesondere ca. 60° versetzt zueinander in einer Schnittebene durch den ringförmigen Körper auf diesem angeordnet, kann der oben aufgezeigte Vorteil in besonderem Maße erzielt werden.

Entsprechend ergibt sich dieser Vorteil, wenn die Erstreckungen bzw. Vertiefungen in Umfangsrichtung jeweils über ca. 40 bis 80°, insbesondere ca. 60°, in einer Schnittebene durch den ringförmigen Körper auf diesem erstreckt sind.

Dabei ist es besonders vorteilhaft, dass die Erstreckungen bzw. Vertiefungen auch die Form von Buchstaben, Ziffern, Bilddarstellungen oder dgl. umfassen können. Somit lässt sich eine Dichteinrichtung gemäß der Erfindung, insbesondere eine O-ringartige oder polygonringartige Dichteinrichtung mit einem Herstellerkennzeichen oder Herstellernamen bzw. mit Produktionshinweisen versehen, die gleichzeitig gemäß der Erfindung eine gewollte Undichtigkeit im unverpressten Zustand bereitstellen können.

Die erfindungsgemäße Pressverbindung umfasst allgemein eine Stützkörper, eine Presshülse und einen Anschlagabschnitt. Der Anschlagabschnitt kann auch in der Form einer Kunststoff- oder Metallscheibe auf dem Stützkörper vorgesehen sein. Zwischen der Stützkörper und der Presshülse ist ein ringförmiger Zwischenraum vorgesehen, in den ein beispielsweise Kunststoff aufweisendes Rohr eingeschoben werden kann. Die Stützkörper umfasst mindestens eine Nut, in die eine Dichteinrichtung gemäß der Erfindung eingesetzt sein kann. Im unverpressten Zustand ergeben sich somit ein oder mehrere Leckagekanäle. Eine Verpressung der Pressverbindung gemäß der Erfindung führt dazu, dass die Kanäle zugesetzt werden.

Nachfolgend wird die vorliegende Erfindung unter Bezugnahme auf die beigefügten Figuren und unter Bezugnahme auf besondere Ausführungsformen gemäß der Erfindung näher beschreiben, wobei weitere Merkmale gemäß der Erfindung, Vorzüge der Erfindung und Zielsetzungen gemäß der Erfindung offenbart werden. In den Darstellungen zeigen:
- Fig. 1: eine Dichteinrichtung gemäß der Erfindung in einer Draufsicht;
- Fig. 2: einen Schnitt durch die Dichteinrichtung gemäß Fig. 1 entlang der Linie A-A;
- Fig. 3: einen Schnitt B-B durch die Dichteinrichtung gemäß Fig. 1; und
- Fig. 4a bis 4c: verschiedene Pressverbindungen mit Nuten zur Aufnahme einer Dichteinrichtung gemäß der Erfindung, wobei die ebenfalls zylindersymmetrische Presshülse weggelassen ist, in einer Seitenansicht.

Nachfolgend sind gleiche oder wenigstens funktionsgleiche Bestandteile mit gleichen oder zumindest vergleichbaren Bezugszeichen benannt.

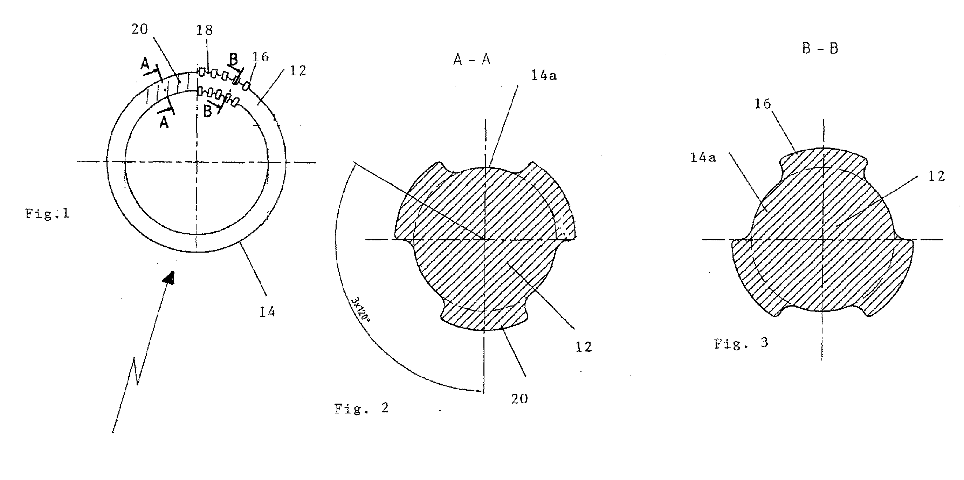

Die Fig. 1 zeigt eine Ansicht einer Dichteinrichtung 10 mit Merkmalen gemäß der Erfindung. Die Dichteinrichtung 10 besteht aus einem ring- bzw. tubusförmigen Körper 12, dessen Oberfläche 14 ein Dichtoberfläche bereitstellt. Die Dichtoberfläche 14 funktioniert in der für O-Ringe üblichen Weise, indem nämlich angrenzende Oberflächen beispielsweise einer Pressverbindung gemäß dem Anspruch 9 und ein in diese eingeschobenes Rohr berührt werden. Die Berührungsflächen stellen dann die angrenzenden Dichtflächen dar, mit denen zusammen die korrespondierenden Dichtflächen der erfindungsgemäßen Dichteinrichtung zusammen wirken.

Auf der Oberfläche 14 der Dichteinrichtung 10 sind deutlich Erstreckungen 16 erkennbar, die sich aus der Oberfläche des ringförmigen bzw. tubusförmigen Körpers 12 hervorstehen. Diese Erstreckungen 16 bilden rechts und links voneinander bzw. rechts und links von ihren eigenen Flanken im unverpressten Zustand gewollte Leckagekanäle, damit durch das Austreten von Medium aus einer Verbindung eines Leitungsnetzes mit der Dichteinrichtung gemäß der Erfindung erkennbar wird, dass eine Verbindung nicht verpresst worden ist. Zwischen einzelnen der Erstreckungen 16 ergeben sich darüber hinaus durch die benachbarte Anordnung der Erstreckungen 16 weitere Leckagekanäle 18, durch die besonders deutlich im unverpressten Zustand Medium, etwa Wasser, Gas oder dgl. austreten kann.

Mit dem Bezugszeichen 20 ist eine Kennzeichnung benannt, beispielsweise in der Form einer Firmennamens, eines Typenkennzeichens für die Dichteinrichtung, oder dgl., wobei diese Kennzeichnung 20 ebenfalls erhaben sein kann, so dass die Leckagefunktion durch die Kennzeichnung 20 ausgeübt werden kann. Wie zu erkennen ist, sind die Erstreckungen 16 bzw. 20 nicht vollumfänglich ausgebildet, da bereits eine teilumfängliche Ausbildung der Erstreckungen und dementsprechend von Vertiefungen die gewünschte Leckagefunktion ausüben kann.

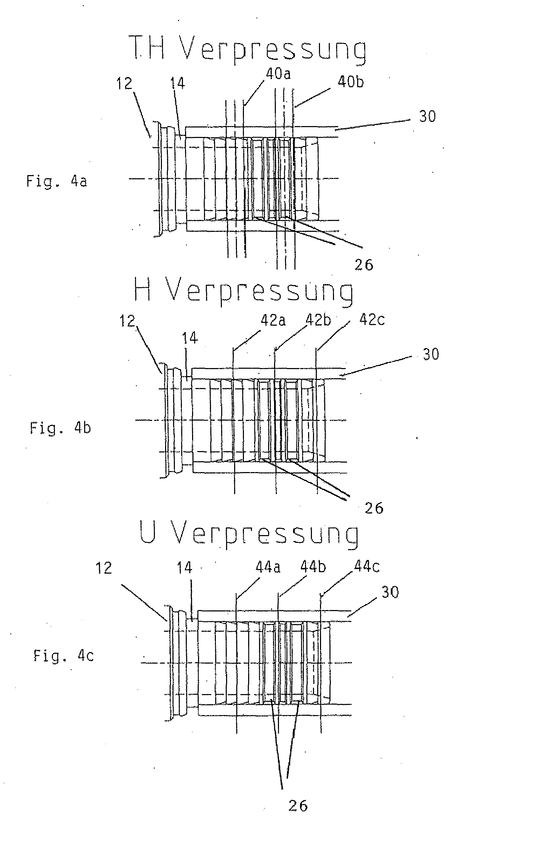

Die dargestellte Ausführungsform 10 gemäß Fig. 1 kann natürlich mit diversen Durchmessern des Ringes bzw. ringförmigen oder tubusförmigen Ringkörpers 12 und mit diversen querschnittlichen Formen (siehe Fig. 2 und 3) ausgebildet sein. So kann im Querschnitt der Ringkörper nicht nur im Wesentlichen kreisförmig ausgebildet sein, sondern beispielsweise auch oval. Der Ring selbst wird in der Regel eine Zylindersymmetrie aufweisen, etwa wie die Verbindungseinrichtung, in die die Dichteinrichtung 10 gemäß den Fig. 1 bis 3 eingesetzt werden kann (siehe auch Fig. 4a bis 4c).

Insoweit der Dichtkörper mit Erstreckungen und nicht mit Vertiefungen ausgebildet ist, um die gewollte Leckagefunktion auszuüben, hat die Dichteinrichtung durch die Montage auf einer Pressverbindung keine Kerbwirkung durch die Dehnung bzw. Weitung der Dichteinrichtung während der Montage. Hierdurch kann im verpressten Zustand eine zusätzliche Funktionssicherheit erzielt werden.

So ist es beispielsweise möglich, die Erstreckungen 16 benachbart zu geringen Vertiefungen auszubilden, die dann im verpressten Zustand das zusätzliche Material der Erstreckungen aufnehmen können, so dass sich der Pressdruck in diesem Bereich, der dauerhaft auf die Dichteinrichtung 10 im verpressten Zustand einwirkt, auch über längere Zeit zu keinen nachteiligen Materialwanderungen führen muss. Abhängig von der Materialwahl kann eine Materialwanderung jedoch auch ohne weiteres vermieden werden. Als besonders vorteilhaft hat sich für die Materialwahl ein EPDM-Kunststoff beispielsweise mit einer Shore Härte von 60 bis 90, insbesondere 80, erwiesen. Natürlich sind auch andere für O-Ringe übliche Kunststoffmaterialien ohne weiteres für die Dichteinrichtung gemäß der Erfindung einsetzbar.

In Fig. 2 ist ein Schnitt A-A durch die im vorliegenden Fall erhabene Kennzeichnung 20 gemäß Fig. 1 erkennbar. Der im Querschnitt dargestellte ringförmige Dichtkörper 12 weist zwischen den erhabenen Kennzeichnungsabschnitten 20 Bereiche 14a, auf, die im Wesentlichen auf der gleichen Ebene der Dichtoberfläche 14 des ringförmigen Dichtkörpers 10 liegen. Die Mittelpunkte der Kennzeichnungsbereiche 20 sind in der bevorzugten Ausführungsform um 120° zueinander versetzt. Die freien Bereiche zwischen den Kennzeichnungsbereichen 20 erstrecken sich in etwa über 60° in Umfangsrichtung. Die Kennzeichnungsbereiche 20 erstrecken sich in Umfangsrichtung hier auch über ca. 60°. Durch diese umfängliche Einteilung wird auch für den Fall, dass sich die Dichteinrichtung 10 beim Einsetzen in eine Pressverbindung verdreht oder verwindet, immer ein Aufschriftabschnitt 20 der drei Aufschriflabschnitte 20 im Bereich einer Dichtfläche angrenzender Teil der Pressverbindung und des anzuschlie-βenden Rohres zu liegen kommen, so dass die gewünschte Leckagefunktion sicher erfüllt werden kann.

Natürlich können sich die Erstreckungen der Kennzeichnungsabschnitte 20 auch vollumfänglich um den Außenumfang des ringförmigen Dichtkörpers 12 herumziehen. Diese Ausgestaltung würde jedoch keine zusätzliche Sicherheit in Bezug auf die Leckagefunktion erbringen, sondern lediglich die dichte Verpressung erschweren. Allerdings kann durch eine geeignete Materialwahl auch eine sichere Verpressung und damit Abdichtung im Bereich der Kennzeichnungsbereiche 20 erzielt werden, wenn sich diese um den gesamten Umfang des Dichtkörpers 12 erstrecken.

Natürlich sind auch andere Verhältnisse zwischen den Erstreckungen 20, 16 und den zwischen diesen Erstreckungen umfänglich angeordneten Dichtoberflächen 14 bzw. 18 oder 14a möglich. So können sich die Erstreckungen jeweils über 40 bis ca. 80° erstrecken, während nach wie vor eine Erstreckung über 60° in Umfangsrichtung bevorzugt wird.

Zwischen den Erstreckungen können sich entsprechend erstreckungsfreie Bereiche von ca. 40° bis 80° befinden, wobei nach wie vor für diese erstreckungsfreien Bereiche eine umfängliche Ausdehnung über ca. 60° zu bevorzugen ist.

In Fig. 3 ist ein Querschnitt durch den Dichtkörper 12 entlang der Linie B-B der Dichteinrichtung 10 gemäß Fig. 1 dargestellt. Die für Fig. 2 erläuterten Ausbildungen gelten prinzipiell auch für die Erstreckungen 16 gemäß Fig. 3 sowie für die Zwischenräume gemäß Fig. 3.

Nachfolgend werden einige verschiedene Pressverbindungen gemäß der Erfindung erörtert, bei denen beispielhaft die Dichteinrichtung gemäß der Erfindung zum Einsatz gelangen kann.

Natürlich können auch andere Geometrien von Pressverbindungen verwendet werden. Die Dichteinrichtung 10 gemäß den Fig. 1 bis 3 wird dabei in jeweils vorgesehene Nuten 26 eingesetzt.

In den Fig. 4a bis 4c sind die Lagen von Pressflächen von Presswerkzeugen (nicht dargestellt) in Bezug auf die Stützkörper bei einem Verpressvorgang dargestellt. Ein Rohr 30 ist bis zum Anschlag 14, an den der Bund 12 anschließt, aufgeschoben. Eine das Rohr 30 und die Stützkörper, die in der Regel zylindrisch ausgebildet sein wird, umgehenden Presshülse ist hier nicht dargestellt.

In Fig. 4a ist erkennbar, dass eine Pressfläche 40a so bei der Verpressung zu der Struktur bzw. dem Profil der Stützkörper orientiert ist, dass die Verpressung 40a, die sich durch die entsprechende Pressfläche des Presswerkzeuges ergeben wird, nicht über einem Dichteinrichtung 10 zu liegen kommt, d.h., neben der Nut 26 in Bundrichtung liegt. Die andere Pressfläche respektive Verpressung 40b liegt unmittelbar über der Nut 20, die zur Aufnahme einer Dichteinrichtung gemäß Fig. 1 bestimmt ist.

Bei anderen Pressverbindung kann die Dichtenrichtung nach der Erfindung auch unmittelbar unter einer Verpressung liegen.

Gemäß Fig. 4b liegen die Pressflächen bzw. die Verpressungen 42a, 42b, 42c bei Verwendung einer H-Pressbacke derart, dass die mittlere Pressfläche bzw. Verpressung 42b zwischen den Dichteinrichtungen 10 zu liegen kommt. Auch auf diese Weise werden hinreichende Dichtflächen zwischen den Dichteinrichtungen gemäß Fig. 1, die sich in der Nut 26 befinden, und dem Rohrinnenumfang ausgebildet. Auch für die U-Verpressung gemäß Fig. 4c ergibt sich eine entsprechende Lage der verpressten Bereiche, so dass eine ausreichende Verpressung in den Bereichen der Pressflächen 44a, 44b, 44c einer U-Pressbacke ergeben.

Erkennbar ist, dass die Dichtungseinrichtung 10 gemäß der Erfindung (siehe Fig. 1 bis 3) bei nahezu beliebigen Pressverbindungen und bei nahezu beliebigen Presswerkzeugen unverpresst eine Leckagefunktion zu erfüllen vermag, die durch den Verpressvorgang beseitigt wird.

## Patentansprüche

1. Dichteinrichtung für Pressverbindungen mit einem ringförmigen Körper aus einem elastischen bzw. verformbaren Material, wobei der ringförmige Körper (12) eine Dichtoberfläche (14, 14a) bereitstellt, insbesondere O-ringartig oder polygonartig ist,
**dadurch gekennzeichnet, dass** der ringförmige Körper mindestens eine Erstreckung (16, 20) und/oder Vertiefung aufweist, die aus dem Niveau der Dichtoberfläche (14, 14a) herausragt bzw. unterhalb des Niveaus endet.

2. Dichteinrichtung nach Anspruch 1, **dadurch gekennzeichnet, dass** die Erstreckung bzw. Vertiefung wenigstens ein Leck (18) ausbildet, das durch Verpressung der Dichteinrichtung (10) schließbar ist.

3. Dichteinrichtung nach einem der Ansprüche 1 oder 2, **dadurch gekennzeichnet, dass** wenigstens zwei Erstreckungen bzw, Vertiefungen benachbart an dem Dichtkörper (12) vorgesehen sind.

4. Dichteinrichtung nach einem der Ansprüche 1 bis 3, **dadurch gekennzeichnet, dass** die Erstreckung(en) bzw. Vertiefung(en) entlang der Dichtoberfläche sowohl in Umfangsrichtung des Ringkörpers (12) unterbrochen sind.

5. Dichteinrichtung nach einem der Ansprüche 1 bis 4, **dadurch gekennzeichnet, dass** die Erstreckung(en) (16, 20) bzw. Vertiefung(en) über ca. die Hälfte der Dichtoberfläche in Umfangsrichtung in der querschnittlichen Darstellung erstreckt sind, wobei die andere Hälfte im Wesentlichen auf dem Niveau der Dichtoberfläche ist.

6. Dichteinrichtung nach einem der Ansprüche 1 bis 5, **dadurch gekennzeichnet, dass** in Umfangsrichtung die Erstreckung(en) bzw. Vertiefung(en) um ca. 40° bis ca. 80°, insbesondere um ca. 60° versetzt zueinander in einer Schnittebene durch den ringförmigen Körper (12) auf diesem angeordnet sind.

7. Dichteinrichtung nach Anspruch 6, **dadurch gekennzeichnet, dass** die Erstreckung(en) bzw. Vertzefung(en) in Umfangsrichtung jeweils über ca. 44° bis ca. 80°, insbesondere ca. 60° erstreckt sind.

8. Dichteinrichtung nach einem der Ansprüche 1 bis 7, **dadurch gekennzeichnet, dass** die Erstreckung(en) bzw. Vertiefung (en) Buchstaben, Ziffern, Bilddarstellungen oder dgl. umfassen.

9. Pressverbindung mit einer Stützkörper, einer Presshülse und einem Anschlagabschnitt, wobei in einen ringförmigen Zwischenraum zwischen der Stütz- und der Presshülse ein Rohr, insbesondere ein Kunststoff aufweisendes Rohr einsetzbar ist, wobei die Stützkörper mindestens eine Nut aufweist, **dadurch gekennzeichnet, dass** in der Nut (26) eine Dichteinrichtung (10) nach einem der Ansprüche 1 bis 8 ist, wobei die Pressverbindung unverpresst leck ist und verpresst dicht ist.
